# EUROPEAN PATENT APPLICATION

(11) **EP 3 348 860 A1**
(43) Date of publication of application: **18.07.2018**
(21) Application number: 16844443.8
(22) Date of filing: 08.09.2016
(51) Int. Cl.: F16G 13/20, B25J 18/02

(54) **LINEAR EXTENSION-RETRACTION MECHANISM**

(30) Priority: 11.09.2015 JP 2015179213
(71) Applicant: Life Robotics Inc., Koto-ku Tokyo 135-0047 (JP)
(72) Inventor: YOON, Woo-Keun, Tokyo 135-0047 (JP); SANO, Hikaru, Tokyo 135-0047 (JP)
(74) Representative: Herrero & Asociados, S.L.
(86) International application number: PCT/JP2016/076472
(87) International publication number: WO 2017/043582

(57) **Abstract**

To improve rigidity of a rigid state by joining two types of connection piece strings constituting a linear extension and retraction mechanism and to realize smooth sending-out and pulling-back operations of the connection piece strings.

A linear extension and retraction mechanism has a plurality of first connection pieces (53) connected bendably and a plurality of second connection pieces (54) connected bendably. The first and second connection pieces become linearly rigid when joined together and return to a bent state when separated. The first connection piece has a main body part (530). A pair of bearing sections (531) is provided on front both sides of the main body part, and a single bearing section (532) is provided on a rear center of the main body part. In order to limit bending of the connected first connection pieces to a front surface side from a linearly aligned posture, a projection section (536) protruding to the rear is provided on the bearing section on the rear of the main body part, and a receiving section (535) adapted to receive the projection section is provided between the pair of bearing sections on the front of the main body part.

## Description

### [Technical Field]

Embodiments of the present invention relates to a linear extension and retraction mechanism.

### [Background Art]

Conventionally, articulated robot arm mechanisms are used in an industrial robot and various other fields. Such articulated robot arm mechanisms are combined and equipped, for example, with linear extension and retraction joints. An arm section constituting the linear extension and retraction joint is constituted by joining two types of connection piece strings in which a plurality of pieces each having the same shape are connected in a string, for example. By joining the two types of connection piece strings, a rigid state is formed, and a columnar body having a certain degree of rigidity is constituted. When a motor of the linear extension and retraction joint is rotated forward, the arm section in the shape of the columnar body is sent out from an ejection section, and when it is rotated backward, the arm section is pulled back. The joined state of the connection piece strings is cancelled on a rear of the ejection section, the rigid state is restored to the bent state, and they are housed in a main body part in that state.

Employment of this linear extension and retraction joint to the articulated robot arm mechanism makes an elbow joint unnecessary, and since a singular point can be easily solved, it is an extremely useful structure in the future.

Importance in the linear extension and retraction joint is to improve rigidity in the rigid state by joining the two types of connection piece strings and to realize operations of smooth sending-out and pulling-back of the connection piece strings to front and rear.

### [Summary of Invention]

### [Technical Problem]

An object is to improve rigidity in a rigid state by joining two types of connection piece strings constituting a linear extension and retraction mechanism and to realize operations of smooth sending-out and pulling-back of the connection piece strings.

### [Solution to Problem]

A linear extension and retraction mechanism according to this embodiment has: a plurality of flat-plate shaped first connection pieces connected together bendably; and a plurality of groove-shaped second connection pieces connected together bendably on a bottom surface side. A foremost one of the second connection pieces is coupled to a foremost one of the first connection pieces. The first and second connection pieces become linearly rigid when joined together and return to a bent state when separated. The first connection piece has a main body part having a flat-plate shape. A pair of bearing sections is provided on both sides on a front of the main body part. A single bearing section is provided on a center on a rear of the main body part. The pair of bearing sections on the front and the bearing section on the rear are inserted with a shaft. In order to limit bending of the connected first connection pieces to a front surface side from a linearly aligned posture, a projection section protruding to the rear is provided on the bearing section on the rear, and a receiving section receiving the projection section is provided between the pair of bearing sections on the front.

### [Brief Description of Drawings]

[Figure 1] Figure 1 is an appearance perspective view of a robot arm mechanism including a linear extension and retraction joint according to this embodiment.
[Figure 2] Figure 2 is a view of an internal structure of the robot arm mechanism in Figure 1 when seen from a sectional direction.
[Figure 3] Figure 3 is a diagram illustrating a constitution of the robot arm mechanism in Figure 1 by symbols.
[Figure 4] Figures 4 are a side view, a top plan view, and a bottom plan view of an arm section in Figure 1.
[Figure 5] Figure 5 is a side view of a first connection piece in Fig. 1.
[Figure 6] Figure 6 is a perspective view of the first connection piece in Figure 1 when seen from a lower rear side.
[Figure 7] Figure 7 is a perspective view of the first connection piece in Figure 1 when seen from a lower front side.
[Figure 8] Figure 8 is a perspective view of the first connection piece in Figure 1 when seen from an upper front side.
[Figure 9] Figure 9 is a perspective view of the first connection piece in Figure 1 when seen from an upper rear side.
[Figure 10] Figure 10 is a side view of the first connection piece string in Figure 1.
[Figure 11] Figure 11 is an A-A sectional view of Figure 10.
[Figure 12] Figure 12 is a side view of a second connection piece in Figure 1.
[Figure 13] Figure 13 is a perspective view of the second connection piece in Figure 1 when seen from the upper rear side.
[Figure 14] Figure 14 is a perspective view of the second connection piece in Figure 1 when seen from the upper front side.
[Figure 15] Figure 15 is a side view illustrating a position relationship between the first connection piece string in Figure 1 and a roller of an ejection section.
[Figure 16] Figure 16 is a side view illustrating a length of the first connection piece with respect to the second connection piece in Figure 1.

### [Description of Embodiment]

A linear extension and retraction mechanism according to this embodiment will be described below by referring to the attached drawings. The linear extension and retraction mechanism according to this embodiment can be used as a single mechanism (joint). In the description below, a robot arm mechanism in which one joint in a plurality of joints is constituted by the linear extension and retraction mechanism according to this embodiment will be described as an example. In the description below, the same reference numerals are given to constituent elements having substantially the same functions and constitutions, and duplicated explanation will be made only when necessary.

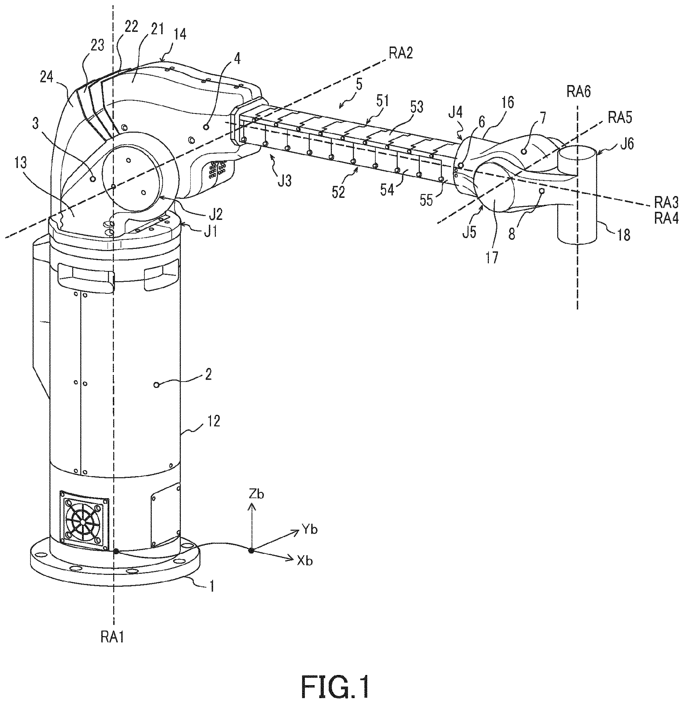

Figure 1 is an appearance perspective view of a robot arm mechanism according to this embodiment. The robot arm mechanism has a plurality of--six therein-- joints J1, J2, J3, J4, J5, and J6. The plurality of joints J1, J2, J3, J4, J5, and J6 are arranged in order from a base 1. Each of the joints is connected by a link. Generally, the first, second, and third joints J1, J2, and J3 are called root three axes, and the fourth, fifth, and sixth joints J4, J5, and J6 are called wrist three axes adapted to change a posture of a hand device. The wrist section has the fourth, fifth, and sixth joints J4, J5, and J6 constituting the wrist three axes and links connecting these joints. At least one of the joints J1, J2, and J3 constituting the root three axes is a linear extension and retraction joint. Here, the third joint J3 is constituted to be a linear extension and retraction joint, that is, a joint with a relatively long extension and retraction distance, in particular. An arm section 5 shows an extension and retraction portion of the linear extension and retraction joint J3 (third joint J3).

The first joint J1 is a torsion joint that turns on a first axis of rotation RA1 supported perpendicularly to a grounding surface of the base 1. The second joint J2 is a bending joint that turns on a second axis of rotation RA2 arranged perpendicularly to the first axis of rotation RA1. The third joint J3 is a joint where an arm section 5 extends and retracts linearly along a third axis (axis of linear movement) RA3 arranged perpendicularly to the second axis of rotation RA2.

The fourth joint J4 is a torsion joint that turns on a fourth axis of rotation RA4 which substantially matches the third axis of movement RA3. The fifth joint J5 is a bending joint that turns on a fifth axis of rotation RA5 arranged perpendicularly to the fourth axis of rotation RA4. The sixth joint J6 is a bending joint that turns on a sixth axis of rotation RA6 arranged perpendicularly to the fourth axis of rotation RA4 and the fifth axis of rotation RA5.

The first, second, and third joints J1, J2, and J3 are arranged in order from the base 1. A main body frame 2 as a link is interposed between the base 1 and the first joint J1, a rotating frame 3 as a link between the first joint J1 and the second joint J2, and an up/down frame 4 as a link between the second joint J2 and the third joint J3, respectively.

Specifically, one end of the main body frame 2 is connected to the base 1. The other end of the main body frame 2 is connected to a fixed section of the first joint J1. To the fixed section of the first joint J1, a movable section of the first joint J1 is mounted rotatably around the axis of rotation RA1. To the movable section of the first joint J1, one end of the rotating frame 3 is connected. When the first joint J1 is rotated, the movable section is rotated around the axis of rotation RA1 with respect to the fixed section of the first joint J1. As a result, the rotating frame 3 connected to the movable section pivots together with a portion on the front thereof around the axis of rotation RA1, that is, makes a swing operation to left and right. The fixed section of the first joint J1 may be fixed to the base. In this case, the other end of the main body frame 2 and the one end of the rotating frame 3 are connected to the movable section of the first joint J1. When the first joint J1 is rotated, the main body frame 2 connected to the movable section is rotated around the axis of rotation RA1, and the rotating frame 3 turns together with the portion on the front thereof around the axis of rotation RA1.

To the other end of the rotating frame 3, a fixed section of the second joint J2 is connected. On the fixed section of the second joint J2, a movable section of the second joint J2 is mounted rotatably around the axis of rotation RA2. To the movable section of the second joint J2, one end of the up/down frame 4 is connected. When the second joint J2 is rotated, the movable section is rotated around the axis of rotation RA2 with respect to the fixed section of the second joint J2. As a result, the up/down frame 4 connected to the movable section goes up/down with the portion on the front thereof in a perpendicular direction around the axis of rotation RA2.

To the other end of the up/down frame 4, a fixed section (ejection section 58) of the third joint J3 is connected. On the fixed section of the third joint J3, a movable section (arm section 5) of the third joint J3 is mounted capable of extension and retraction along the axis of linear movement RA3. On the movable section of the third joint J3, the wrist section is mounted. When the third joint J3 is extended/retracted, the movable section (arm section 5) is extended/retracted with respect to the fixed section of the third joint J3. As a result, the wrist section connected to the movable section is moved linearly along the axis of linear movement RA3.

In the wrist section, the fourth, fifth, and sixth joints J4, J5, and J6 are arranged in order from the movable section of the third joint J3. A frame 6 as a link is interposed between the third joint J3 and the fourth joint J4, a frame 7 as a link between the fourth joint J4 and the fifth joint J5, and a frame 8 as a link between the fifth joint J5 and the sixth joint J6, respectively.

Specifically, one end of the frame 6 is connected to the movable section (arm section 5) of the third joint J3. To the other end of the frame 6, the fixed section of the fourth joint J4 is connected. The movable section of the fourth joint J4 is mounted rotatably around the axis of rotation RA4 with respect to the fixed section of the fourth joint J4. To the movable section of the fourth joint J4, one end of the frame 7 is connected. When the fourth joint J4 is rotated, the movable section is rotated around the axis of rotation RA4 with respect to the fixed section of the fourth joint J4. As a result, the frame 7 connected to the movable section is rotated together with the portion on the front thereof around the axis of rotation RA4.

To the other end of the frame 7, a fixed section of the fifth joint J5 is connected. On the fixed section of the fifth joint J5, a movable section of the fifth joint J5 is mounted rotatably around the axis of rotation RA5. To the movable section of the fifth joint J5, one end of the frame 8 is connected. When the fifth joint J5 is rotated, the movable section is rotated around the axis of rotation RA5 with respect to the fixed section of the fifth joint J5. As a result, the frame 8 connected to the movable section rises together with the portion on the front thereof in the perpendicular direction around the axis of rotation RA5.

To the other end of the frame 8, a fixed section of the sixth joint J6 is connected. On the fixed section of the sixth joint J6, a movable section of the sixth joint J6 is mounted rotatably around the axis of rotation RA6. To the movable section of the sixth joint J6, an adapter for mounting the hand device is provided. When the sixth joint J6 is rotated, the movable section is rotated around the axis of rotation RA6 with respect to the fixed section of the sixth joint J6. As a result, the hand device mounted on the adapter of the movable section is turned around the axis of rotation RA6.

As described above, the hand device mounted on the adapter provided on the movable section of the sixth joint J6 of the wrist section is moved to an arbitrary position by the first, second, and third joints J1, J2, and J3, and arranged in an arbitrary posture by the fourth, fifth, and sixth joints J4, J5, and J6. Particularly, a length of an extension/retraction distance of the arm section 5 of the third joint J3 enables the hand device to reach targets in a wide range from a proximate position of the base 1 to a remote position. The third joint J3 is characterized by a linear extension/retraction operation realized by a linear extension and retraction mechanism constituting it and the length of its extension/retraction distance.

The first, second, and third joints J1, J2, and J3 constituting the root three axes are covered by a plurality of covers 12, 13, and 14. The main body cover 12 is molded having a cylindrical shape. The main body cover 12 has its one end fixed to the base 1 and the other end fixed to the fixed section of the first joint J1 so that a center axis of the cylinder matches the axis of rotation RA1. As a result, the mechanism (main body frame 2) arranged from the base 1 to the fixed section of the first joint J1 is covered by the main body cover 12.

The rotation cover 13 is molded having an oval cover shape. The rotation cover 13 has its one end fixed to the movable section of the first joint J1 and fixed to the fixed section of the second joint J2. As a result, regarding the rotation cover 13, the mechanism arranged from the movable section of the first joint J1 to the fixed section of the second joint J2 is covered by the rotation cover 13.

The up/down cover 14 is made up of four covers 21, 22, 23, and 24 constituted having a nested structure. The rear cover 24 in the four covers 21, 22, 23, and 24 has its rear portion molded having a cylindrical shape continuing to the main body cover 12 and a front portion molded having a saddle shape. The front cover 21 has its front portion molded having a cylindrical shape and a rear portion molded having a saddle shape. Each of the covers 22 and 23 is molded having a saddle shape. The rear cover 24 has its rear end fixed to the movable section of the first joint J1. The covers 21, 22, and 23 are attached to the movable section of the second joint J2 in a state straddling the second joint J2 from a side perpendicular to its axis of rotation RA2. When the second joint J2 is rotated so that the arm section 5 is directed downward, the covers 21, 22, and 23 are pulled out in order from the cover 24 of the up/down cover 14 by following the movable section of the second joint J2. When the second joint J2 is rotated so that the arm section 5 is directed upward, the covers 23, 22, and 21 are housed in order in the cover 24 of the cover 14 by following the movable section of the second joint J2. As a result, together with the mechanism (up/down frame 4) arranged from the movable section of the second joint J2 to the fixed section of the third joint J3, a conveyance path of the arm section 5 from the movable section of the first joint J1 to the fixed section of the third joint J3 is covered by the up/down cover 14.

The up/down cover 14 forms a continuing hollow structure together with the main body cover 12. In this hollow portion, a rear portion of the arm section 5 is housed. When the arm section 5 is extended, the arm section 5 is sent out through an opening on a leading end of the up/down cover 14 toward an outside. When an arm section 5 is retracted, the arm section 5 is pulled back from the opening on the leading end of the up/down cover 14 toward an inside and is housed in the hollow portion.

The fourth, fifth, and sixth joints J4, J5, and J6 constituting the wrist three axes are covered by covers 16, 17, and 18, respectively. The cover 16 is molded having a box shape with an opening on one end. The cover 16 is fixed to the movable section of the fourth joint J4 or the frame 7 so that the opening is directed rearward. As a result, the fourth joint J4 and the links before and after that (frames 6, 7) and the fixed section of the fifth joint J5 are covered by the cover 16. The cover 17 covering the fifth joint J5 and the cover 18 covering the sixth joint J6 are coupled to each other. The cover 17 is molded having a circular lid shape. The cover 18 is molded having a cylindrical shape. The cover following the shape of the frame 8 continues from the cover 17 to the cover 18. These covers 17 and 18 are fixed to the movable section of the fifth joint J5. As a result, the movable section of the fifth joint J5, the frame 8, and the sixth joint J6 are covered by the covers 17 and 18.

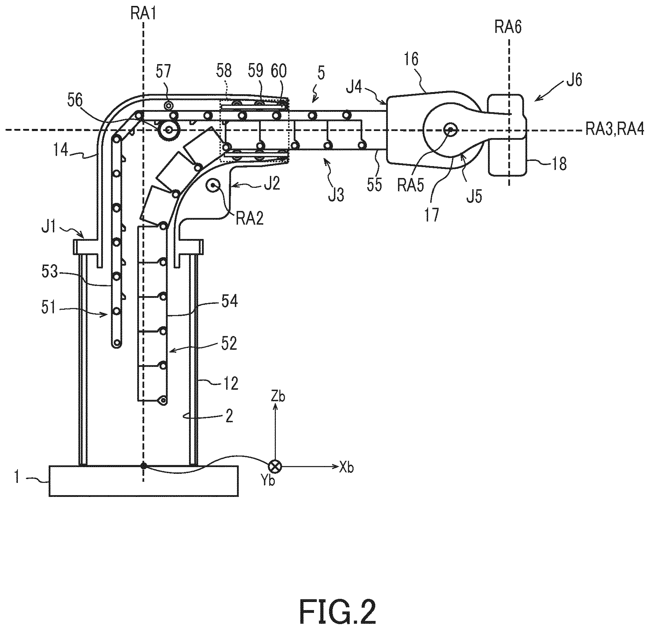

Figure 2 is a perspective view illustrating an internal structure of the robot arm mechanism in Figure 1. The linear extension and retraction mechanism has the arm section 5 and the ejection section 58. The arm section 5 has a first connection piece string 51 and a second connection piece string 52. The first connection piece string 51 is made up of a plurality of first connection pieces 53 connected in a string shape. The first connection piece 53 is constituted having a substantially flat plate shape. Each pair of successive first connection pieces 53 is connected together on each other's end parts by a shaft, forming a string. The first connection piece string 51 is constituted bendable to an inner side and non-bendable to an outer side. The second connection piece string 52 is made up of a plurality of second connection pieces 54 connected in a string shape. The second connection piece 54 is constituted by a groove body having a U-shaped sectional surface, for example. Each pair of successive second connection pieces 54 is connected together on each other's bottom-surface end parts by a shaft, forming a string. The second connection piece string 52 is constituted bendable to the inner side and non-bendable to the outer side. Structures of the first and second connection pieces 53 and 54 will be described later. A foremost one of the first connection pieces 53 of the first connection piece string 51 and a foremost one of the second connection pieces 54 of the second connection piece string 52 are connected with each other by a head piece 55. The head piece 55 has a combined shape of the second connection piece 54 and the first connection piece 53, for example.

The ejection section 58 joins the first and second connection piece strings 51 and 52 and constitutes a columnar body and supports the columnar body vertically and horizontally. The ejection section 58 has a plurality of rollers 59 supported by a frame 60 having a square cylindrical shape. The plurality of rollers 59 are distributed by the frame 60 vertically and horizontally by sandwiching the arm section 5. The plurality of rollers 59 supporting the arm section 5 from above, for example, are separated from the plurality of rollers 59 supporting the arm section 5 from below by a distance substantially equal to a thickness of the arm section 5 or slightly smaller than the thickness of the arm section 5. The plurality of rollers 59 supporting the arm section 5 from above is arranged along an arm center axis at an interval substantially equal to a length of the first connection piece 53. Similarly, the plurality of rollers 59 supporting the arm section 5 from a lower surface are arranged along the arm center axis at an interval substantially equal to a length of the second connection piece 54. On the rear of the ejection section 58, a guide roller 57 and a drive gear 56 are provided so as to oppose each other by sandwiching the first connection piece string 51. The drive gear 56 is connected to a stepping motor (not shown) through a speed reducer. On a rear surface of the first connection piece 53, a linear gear 500 is formed along a connection direction. The linear gears 500 which are adjacent when plurality of first connection pieces 53 are aligned linearly are connected linearly and constitute a long linear gear. The drive gear 56 is meshed with the linear-shaped linear gear. The linear gears connected linearly constitute a rack-and-pinion mechanism together with the drive gear 56.

When the arm section 5 is extended, the drive gear 56 rotates forward, and the first connection piece string 51 is brought into a posture parallel to the arm center axis and guided by the guide roller 57 into the ejection section 58. With movement of the first connection piece string 51, the second connection piece string 52 is guided to the ejection section 58 by a guide rail (not shown) arranged on the rear of the ejection section 58. The first and second connection piece strings 51 and 52 guided to the ejection section 58 are pressed (compressed) to each other by the plurality of rollers 59 arranged above and below. As a result, the first connection piece string 51 is joined to the second connection piece string 52, and the first and second connection piece strings 51 and 52 constitute a columnar rod body (hereinafter referred to as a columnar body or the arm section 5). By firmly holding the columnar body by joining the first and second connection piece strings 51 and 52 by the ejection section 58, the joined state of the first and second connection piece strings 51 and 52 is maintained. When the joined state of the first and second connection piece strings 51 and 52 is maintained, bending of the first and second connection piece strings 51 and 52 constrains each other. As a result, the columnar body formed by joining of the first and second connection piece strings 51 and 52 has a certain degree of rigidity. In this columnar body, the second connection piece 54 is constituted having a tubular body having various sectional shapes as entirety together with the first connection piece 53. The tubular body is defined as a shape surrounded by a top plate, a bottom plate, and both side plates on top, bottom, and left and right sides and is left open on front and rear end parts. The columnar body formed by joining of the first and second connection piece strings 51 and 52 is sent out linearly along the third axis of linear movement RA3 through the opening of the up/down cover 14 toward the outside with the head piece 55 serving as a leading piece.

When the arm section 5 is retracted, the drive gear 56 rotates backward, and the first connection piece string 51 engaged with the drive gear 56 is pulled back toward a hollow portion formed by the main body cover 12 and the up/down cover 14. With the movement of the first connection piece string 51, the columnar body is pulled back through the opening of the up/down cover 14 to the inner side. The columnar body pulled back is separated behind the ejection section 58. For example, the first connection piece string 51 constituting the columnar body maintains a horizontal posture by the guide roller 57 and the drive gear 56, while the second connection piece string 52 constituting the columnar body is pulled downward by gravity, and consequently, the second connection piece string 52 and the first connection piece string 51 are separated from each other. The separated first and second connection piece strings 51 and 52 are restored to the bendable state, respectively. The first and second connection piece strings 51 and 52 both restored to the bendable state are bent to the same direction (inner side) and housed in a housing section inside the main body cover 12. At this time, the first connection piece string 51 is housed in the second connection piece string 52 in a substantially parallel state.

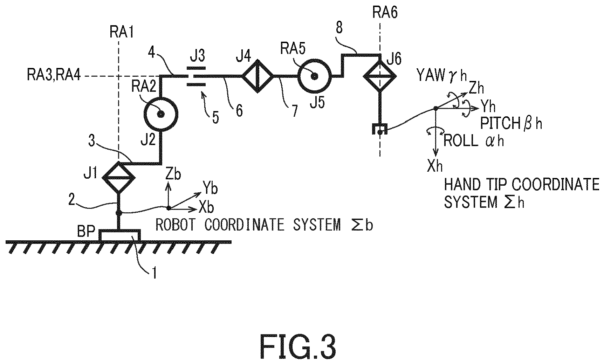

Figure 3 is a diagram illustrating the robot arm mechanism in Figure 1 by symbols. In the robot arm mechanism, three position freedom degrees are realized by the first joint J1, the second joint J2, and the third joint J3 constituting the root three axes. Also, three posture freedom degrees are realized by the fourth joint J4, the fifth joint J5, and the sixth joint J6 constituting the wrist three axes.

A robot coordinate system Σb is a coordinate system having an arbitrary position on the first axis of rotation RA1 of the first joint J1 as an origin. In a robot coordinate system Σb, orthogonal three axes (Xb, Yb, Zb) are specified. The Zb axis is an axis parallel with the first axis of rotation RA1. The Xb axis and the Yb axis are orthogonal to each other and are axes orthogonal to the Zb axis. A hand tip coordinate system ∑h is a coordinate system having an arbitrary position (hand tip reference point) of the hand device mounted on the wrist section as the origin. For example, if the hand device is a two-finger hand, the position of the hand tip reference point (hereinafter referred to simply as a hand tip) is specified at a center position between the two finger tips. In the hand tip coordinate system ∑h, orthogonal three axes (Xh, Yh, Zh) are specified. The Xh axis is an axis parallel with the sixth axis of rotation RA6. The Xh axis is given as a longitudinal axis of the hand tip. The Yh axis and the Zh axis are orthogonal to each other and is an axis orthogonal to the Xh axis. The Yh axis is given as a horizontal axis of the hand tip. A hand tip posture is given as rotation angles (a rotation angle (yaw angle) αh around the Xh axis, a rotation angle (pitch angle) βh around the Yh axis, a rotation angle (roll angle) γh around the Zh axis around each of the orthogonal three axes of the hand tip coordinate system ∑h with respect to the robot coordinate system ∑b.

The base 1 is installed on a grounding surface BP. A rear end portion of the main body frame 2 is provided perpendicularly to the base 1. The fixed section of the first joint J1 is mounted on a leading end portion of the main body frame 2. The first joint J1 is constituted as a torsion joint that turns on the axis of rotation RA1. The axis of rotation RA1 is arranged perpendicularly to the grounding surface BP on which the base 1 is installed.

A rear end portion of the rotating frame 3 as a link connecting the first joint J1 and the second joint J2 is mounted on the movable section of the first joint J1. The fixed section of the second joint J2 is mounted on a leading end portion of the rotating frame 3. The second joint J2 is constituted as a bending joint that turns on the axis of rotation RA2. The axis of rotation RA2 is provided with a direction perpendicular to the axis of rotation RA1 of the first joint J1. Moreover, the second joint J2 is offset in two directions, that is, a direction (the Zb axis direction) of the axis of rotation RA1 and a direction perpendicular to the axis of rotation RA1 with respect to the first joint J1. The rotating frame 3 is constituted so that the second joint J2 is offset in the aforementioned 2 directions with respect to the first joint J1.

A rear end portion of the up/down frame 4 as a link connecting the second joint J2 and the third joint J3 is mounted on the movable section of the second joint J2. The fixed section of the third joint J3 is mounted on the leading end portion of the up/down frame 4. The fixed section of the third joint J3 constitutes the ejection section 58 which will be described later. The arm section 5 as a movable section of the third joint J3 is provided capable of extension and retraction with respect to this ejection section 58. The third joint J3 is constituted as a linear extension and retraction joint that turns on the axis of linear movement RA3. The axis of linear movement RA3 is provided to a direction perpendicular to the axis of rotation RA2. In a reference posture in which the rotation angle of the second joint J2 is zero degrees, that is, a derrick angle of the arm section 5 is zero degrees, and the arm section 5 is horizontal, the axis of linear movement RA3 of the third joint J3 is provided in the direction perpendicular to the axis of rotation RA1 of the first joint J1 as well as the axis of rotation RA2 of the second joint J2. On the robot coordinate Σb, the axis of linear movement RA3 is provided parallel with the Xb axis perpendicular to the Yb axis and the Zb axis. Moreover, the third joint J3 is offset in the two directions, that is, the direction (Xb axis direction) of the axis of linear movement RA3 with respect to the second joint J2 and the direction of the Zb axis orthogonal to the axis of linear movement RA3 and the axis of rotation RA2 of the second joint J2. The up/down frame 4 is constituted so that the third joint J3 is offset in the aforementioned two directions with respect to the second joint J2.

A rear end portion of the frame 6 as a link connecting the second joint J2 and the third joint J3 is mounted on the movable section (arm section 5) of the third joint J3. The fixed section of the fourth joint J4 is mounted on a leading end portion of the frame 6. The fourth joint J4 is constituted as a torsion joint that turns on the axis of rotation RA4. The axis of rotation RA4 is arranged so as to substantially match the axis of linear movement RA3 of the third joint J3.

A rear end portion of the frame 7 as a link connecting the fourth joint J4 and the fifth joint J5 is mounted on the movable section of the fourth joint J4. The fixed section of the fifth joint J5 is mounted on the leading end portion of the frame 7. The fifth joint J5 is constituted as a bending joint that turns on the axis of rotation RA5. The axis of rotation RA5 is arranged so as to be substantially orthogonal to the axis of linear movement RA3 of the third joint J3 and the axis of rotation RA4 of the fourth joint J4.

A rear end portion of the frame 8 as a link connecting the fifth joint J5 and the sixth joint J6 is mounted on the movable section of the fifth joint J5. The fixed section of the sixth joint J6 is mounted on a leading end portion of the frame 8. The sixth joint J6 is constituted as a torsion joint that turns on the axis of rotation RA6. The axis of rotation RA6 is arranged so as to be substantially orthogonal to the axis of rotation RA4 of the fourth joint J4 and the axis of rotation RA5 of the fifth joint J5. The movable section of the sixth joint J6 has an adapter, and the hand device as a end effector is mounted on this adapter. The sixth joint J6 is provided for turning the hand device as the end effector to left and right. In the sixth joint J6, the axis of rotation RA6 may be constituted as a bending joint substantially orthogonal to the axis of rotation RA4 of the fourth joint J4 and the axis of rotation RA5 of the fifth joint J5.

As described above, by fitting one bending joint in the root three axes of the plurality of joints J1 to J6 in the linear extension and retraction joint, by offsetting the second joint J2 in two directions with respect to the first joint J1, and by offsetting the third joint J3 in the two directions with respect to the second joint J2, the robot arm mechanism of the robot device according to this embodiment solves a singularity posture in the structure.

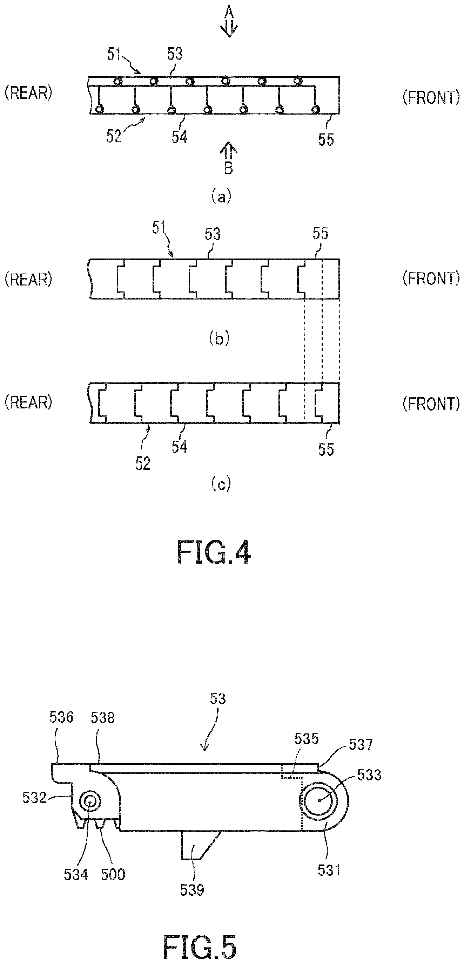

Figures 4 are a side view, a top plan view, and a bottom plan view of the arm section 5 in Figure 1. Figure 4(a) is a side view illustrating the arm section 5 in Figure 1. Figure 4(b) is an A arrow view (top plan view) of the Figure 4(a). Figure 4(c) is a B arrow view (bottom plan view) of Figure 4(a). As illustrated in Figure 4(b), the first connection piece string 51 is made up by the plurality of first connection pieces 53 connected in a string. The first connection piece 53 has its front portion molded having a recess shape and a rear portion molded having a substantially flat plate with a projecting shape. In the successive first connection pieces 53, a projection portion on a rear of the front first connection piece 53 is fitted in a recess portion on a leading end of the rear first connection piece 53 and they are connected together by the shaft. Similarly, the second connection piece string 52 is made up by connecting the plurality of second connection pieces 54 in a string. The second connection piece 54 is molded into a groove body having a substantially U-shaped sectional surface. In the second connection piece 54, its front portion is molded having a recess shape and a rear portion is molded having a projecting shape. In the successive second connection pieces 54, the projection portion on the rear of the front second connection piece 54 is fitted in the recess portion on the leading end of the rear second connection piece 54 and they are coupled by the shaft. Structures of the first and second connection pieces 53 and 54 will be described below.

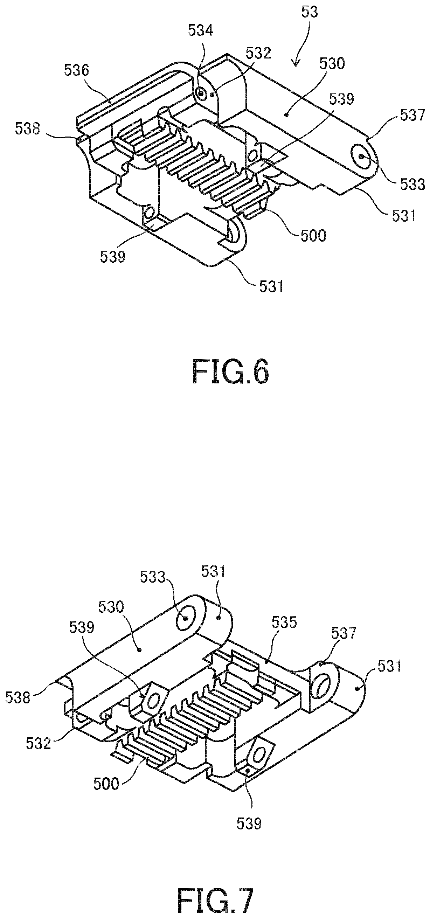

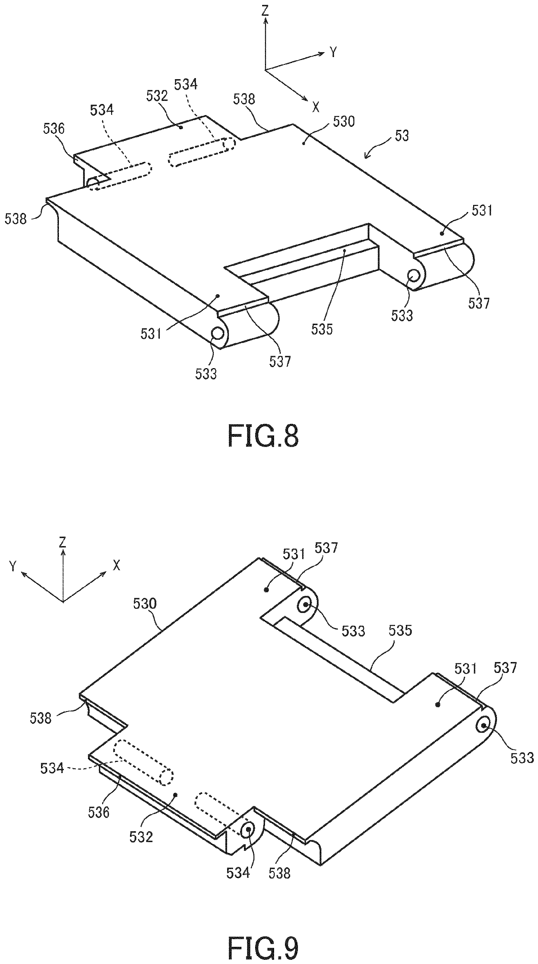

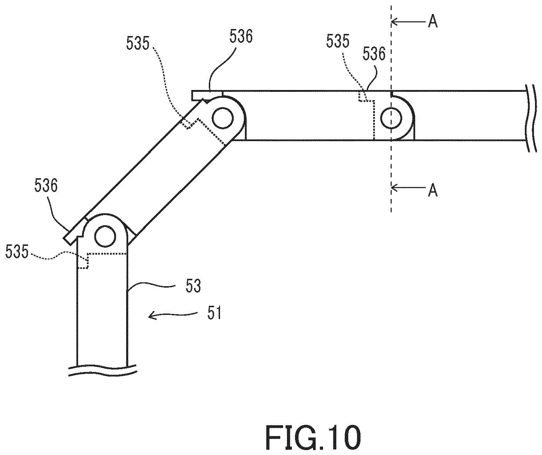

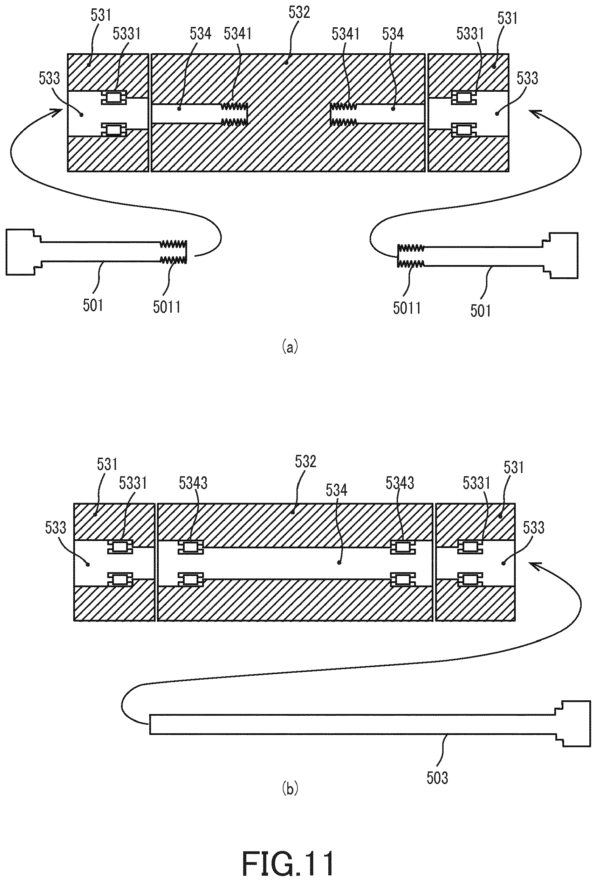

Figure 5 is a side view of the first connection piece 53 in Figure 1. Figure 6 is a perspective view of the first connection piece 53 in Figure 1 when seen from a lower rear side. Figure 7 is a perspective view of the first connection piece 53 in Figure 1 when seen from a lower front side. Figure 8 is a perspective view of the first connection piece 53 in Figure 1 when seen from an upper front side. Figure 9 is a perspective view of the first connection piece 53 in Figure 1 when seen from an upper rear side. Figure 10 is a side view of the first connection piece string 51 in Figure 1. Figure 11 is an A-A sectional view of Figure 10.

The first connection piece 53 has its front portion molded having a recess shape and a rear portion molded having a substantially flat plate with a projecting shape. Specifically, the first connection piece 53 has a main body part 530 molded having a planar rectangular shape. On front both sides of the main body part 530, a pair of bearing blocks (hereinafter referred to as front bearing blocks) 531 are provided. On a rear center of the main body part 530, a single bearing block (hereinafter referred to as a rear bearing block) 532 is provided. Front surfaces of these bearing blocks 531, 532 constitute a single flat surface together with the surface of the main body part 530.

The pair of bearing blocks 531 on the front both sides of the main body part 530 are separated from each other by a distance substantially equal to a width of the rear bearing block 532. The front bearing block 531 has a width substantially equal to a distance from one end of the rear bearing block 532 in a width direction to one end of the first connection piece 53 in the width direction. For example, the rear bearing block 532 has the width of 1/2 of the width of the first connection piece 53, and the front bearing block 531 has the width of 1/4 of the width of the first connection piece 53. As a result, in the successive first connection pieces 53, the single bearing block 532 on a rear center of the front first connection piece 53 can be inserted between the pair of bearing blocks 531 on the front both sides of the rear first connection piece 53. In a state where the bearing block 532 on the rear center of the front first connection piece 53 is inserted between the pair of bearing blocks 531 on the front both sides of the rear first connection piece 53, a side surface of each of the successive first connection pieces 53 constitutes a single flat surface.

The first connection piece 53 has a structure for rotatably connecting the successive first connection pieces 53 to each other. Specifically, in the front pair of bearing blocks 531, a pair of shaft holes 533 penetrating in parallel with the width direction of the first connection piece 53 is drilled, respectively. In the rear bearing block 532, a pair of shaft holes 534 is drilled in parallel with the width direction of the first connection piece 53 is drilled. One of the pair of shaft holes 534 is drilled from one end to the other end in the width direction of the bearing block 532, while the other is drilled from the other end to the one end in the width direction of the bearing block 532. Each of the pair of shaft holes 534 has a depth less than 1/2 of the width of the bearing block 532. As a result, in the state where the bearing block 532 on the rear center of the front first connection piece 53 is inserted between the pair of bearing blocks 531 on the front both sides of the rear first connection piece 53, the front pair of shaft holes 533 of the rear first connection piece 53 and the rear pair of shaft holes 534 of the front first connection piece 53 are continuously connected, respectively, and a pair of insertion holes is constituted. The shaft is inserted into each of the pair of insertion holes, and the successive first connection pieces 53 are connected. As described above, the plurality of first connection pieces 53 are connected in a string and constitutes the first connection piece string 51. The successive first connection pieces 53 can rotate with respect to each other around the shaft, whereby the first connection piece string 51 can be bent.

The first connection piece 53 has a structure of not being bent to the outer side (piece surface side) anymore from the state where the first connection piece string 51 is arranged linearly. A protrusion section is formed on the rear end portion of the first connection piece 53, and a receiving section adapted to receive the protrusion section is formed on the leading end portion.

Specifically, on a rear end upper surface of the rear bearing block 532 of the first connection piece 53, a protrusion section 536 protruding rearward is formed. On an upper surface on the rear end both sides of the main body part 530 of the first connection piece 53, a pair of protrusion sections 538 protruding rearward is formed.

On a leading end upper surface of the main body part 530 of the first connection piece 53, a receiving section 535 adapted to receive the protrusion section 536 on the rear end of the rear bearing block 532 is formed. This receiving section 535 is formed having a shape dented from the front surface of the main body part 530. This dent is formed having a depth substantially equal to a thickness of the protrusion section 536 over the whole surface between the pair of bearing blocks 531 on a leading end center of the main body part 530. Similarly, on the leading end upper surfaces of the front pair of bearing blocks 531 of the first connection piece 53, a pair of receiving sections 537 for receiving the pair of protrusion sections 538 on the rear end upper surface of the main body part 530 is formed, respectively. Each of this pair of receiving sections 537 is formed having a shape dented from the front surface of the bearing block 531. A depth of this dent is equal to a thickness of the protrusion section 538.

As illustrated in Figure 10, when the successive first connection pieces 53 are aligned linearly from the state where they are bent to the inner side, the protrusion sections 536 and 538 formed on the rear end of the front first connection piece 53 are fitted in the receiving sections 535 and 537 formed on the leading end of the rear first connection piece 53, respectively. In the state where the protrusion sections 536 and 538 of the front first connection piece 53 are fitted in the receiving sections 535 and 537 of the rear first connection piece 53, the surfaces of the protrusion sections 536 and 538 of the first connection piece 53 constitute a single flat surface together with the surfaces of the receiving sections 535 and 537 of the rear first connection piece 53. As a result, the linearly aligned first connection piece string 51 has its surface constituted flat. Moreover, when the first connection piece string 51 is aligned linearly, the receiving sections 535 and 537 of the rear first connection piece 53 are suppressed from above by the protrusion sections 536 and 538 of the first connection piece 53, respectively. As a result, the rear first connection piece 53 cannot be bent to the outer side anymore from the linearly aligned state with respect to the front first connection piece 53.

As illustrated in Figures 6 and 7, the linear gear 500 constituting the rack-and-pinion mechanism together with the drive gear 56 is formed on the rear surface of the first connection piece 53. The linear gear 500 is formed along a length (connection) direction at a width center on the rear surface of the first connection piece 53. Moreover, a pinhole block 539 for joining the first connection piece string 51 to the second connection piece string 52 is formed on the rear surface of the first connection piece 53. The pinhole block 539 is provided at both side centers on the rear surface of the first connection piece 53, respectively. The pinhole block 539 has a trapezoidal vertical section, and a lock pinhole is drilled in parallel with the length direction of the first connection piece 53 at its thickness center.

Figure 11(a) is the A-A sectional view of the first connection piece string 51 in Figure 10. Figure 11(a) illustrates a connection structure of the successive first connection pieces 53. A bearing 5331 is provided on an inner wall of the shaft hole 533 of the front bearing block 531 in the first connection piece 53. For this bearing 5331, a rolling bearing such as a ball bearing, a roller bearing and the like is applied. A slide bearing made of an alloy requiring a lubricant oil, a slide bearing given self-lubricity by mixing and distributing a solid lubricant mainly composed of molybdenum disulfide and the like in metal, resin or the like may be applied. The shaft hole 534 of the rear bearing block 532 has a diameter substantially equal to a diameter of the bearing 5331, an inner wall of its leading end portion is threaded, and a female thread 5341 is formed. A shaft 501 is molded having a columnar body having a diameter substantially equal to an inner diameter of the bearing 5331. The shaft 501 is formed having a length substantially equal to a distance from one end of the first connection piece 53 to the leading end of the shaft hole 534 of the rear bearing block 532. On a leading end portion of the shaft 501, a male thread 5011 is formed. This male thread 5011 is formed by threading with the same pitch and number of grooves as those of the leading end portion of the shaft hole 534 in the rear bearing block 532.

In the state where the bearing block 532 on the rear center of the front first connection piece 53 is inserted between the bearing blocks 531 on the front both sides of the rear first connection piece 53, the shaft holes 533 of the front pair of bearing blocks 531 in the rear first connection piece 53 is continuously connected to the pair of shaft holes 534 of the rear bearing block 532 in the front first connection piece 53, and the pair of insertion holes is constituted. The shaft 501 is inserted into each of the pair of insertion holes. The shaft 501 inserted into the insertion hole is fixed to the rear bearing block 532 by fastening of the male thread 5011 on its leading end with the female thread 5341 of the shaft hole 534. The bearing 5331 in the shaft hole 533 of the front bearing block 531 is pivotally supported by the shaft 501 inserted into the insertion hole. As a result, removal of the shaft 501 from the insertion hole can be prevented, and the successive first connection pieces 53 are connected and can be rotated with respect to each other around the shaft 501.

Figure 11(b) is a sectional view illustrating another example of the connection structure of the successive first connection pieces 53 in Figure 11(a). As illustrated in Figure 11(b), the shaft hole 534 drilled in the rear bearing block 532 in the first connection piece 53 may penetrate in the width direction of the first connection piece 53. In this case, a bearing 5343 which is the same as the bearing 5331 is provided on an inner wall of the shaft hole 534 of the rear bearing block 532. A shaft 503 has a length substantially equal to the width of the first connection piece 53.

In the state where the bearing block 532 on the rear center of the front first connection piece 53 is inserted between the bearing blocks 531 on the front both sides of the rear first connection piece 53, the shaft hole 533 of the front bearing block 531 in the rear first connection piece 53 and the shaft hole 534 of the rear bearing block 532 in the front first connection piece 53 are continuously connected, and an insertion hole penetrating in the width direction of the first connection piece 53 is constituted. The shaft 503 is inserted from one side of the penetrating insertion hole and is retained by a retaining ring on the other side of the insertion hole. As a result, removal of the shaft 503 from the insertion hole can be prevented. The bearing 5331 of the shaft hole 533 in the front bearing block 531 and the bearing 5343 of the shaft hole 534 in the rear bearing block 532 are pivotally supported by the shaft 503 inserted into the insertion hole. As a result, the successive first connection pieces 53 are connected and can rotate with respect to each other around the shaft 503.

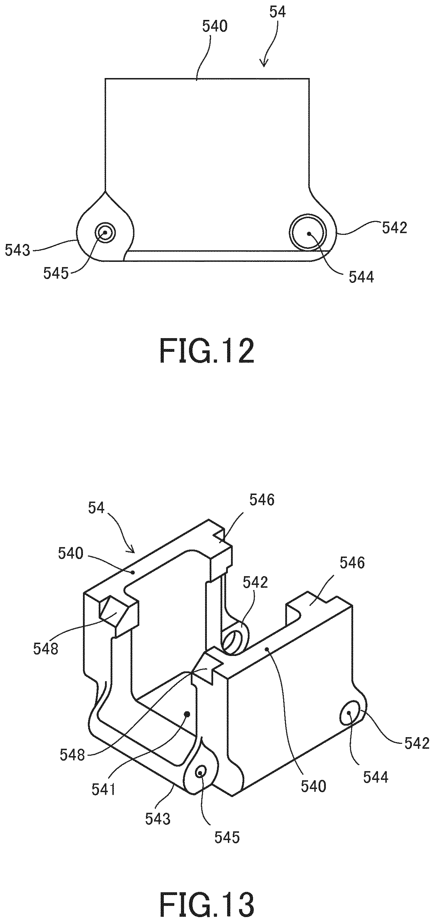

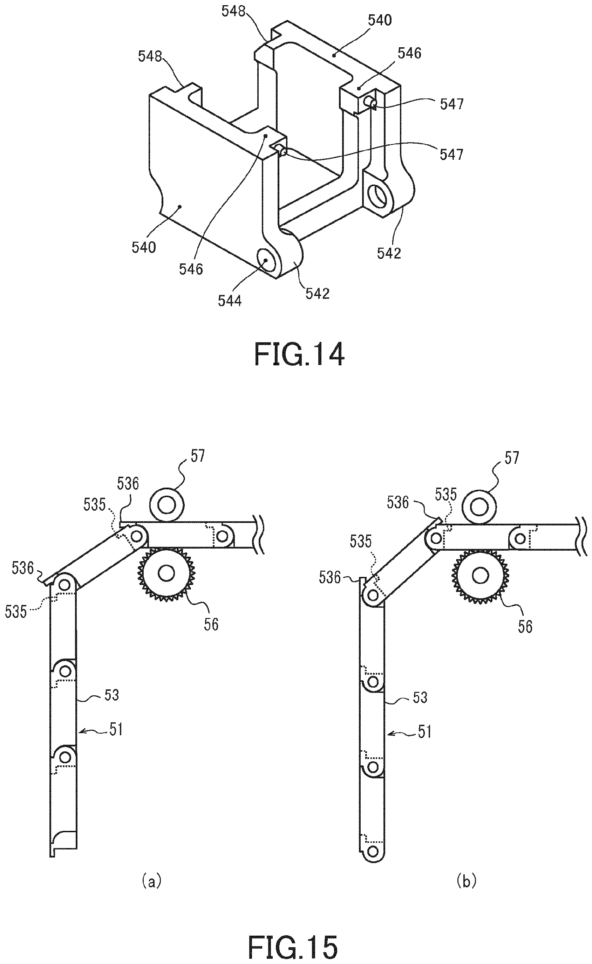

A structure of the second connection piece 54 constituting the second connection piece string 52 will be described by referring to Figures 12 to 14. Figure 12 is a side view of the second connection piece 54 in Figure 1. Figure 13 is a perspective view of the second connection piece 54 in Figure 1 when seen from the upper rear side. Figure 14 is a perspective view of the second connection piece 54 in Figure 1 when seen from the upper front side.

The second connection piece 54 is molded into the groove body having a front portion with a recess shape and a rear portion with a projecting shape. Specifically, the second connection piece 54 has a main body part molded having the groove body with a U-shaped section. The main body part is formed by connecting a pair of side plates 540 having the same size and the same shape in parallel to a bottom plate 541. A bearing block (hereinafter referred to as a rear bearing block) 543 is provided on a rear center of the bottom plate 541. Bearing blocks (hereinafter referred to as front bearing blocks) 542 are provided on front both sides of the bottom plate 541. These front bearing blocks 542 are separated by a distance substantially equal to a width of the rear bearing block 543. The front bearing block 542 has a width substantially equal to a distance from one end in a width direction of the rear bearing block 543 to one end in the width direction of the second connection piece 54. For example, the rear bearing block 543 has a width of 1/2 of the width of the second connection piece 54, and the front bearing block 542 has a width of 1/4 of the width of the second connection piece 54. As a result, in the successive second connection pieces 54, the bearing block 543 on the rear center of the front second connection piece 54 can be inserted between the bearing blocks 542 on the front both sides of the rear second connection piece 54.

The second connection piece 54 has a structure for connecting the successive second connection pieces 54 rotatably with respect to each other. This structure is the same as the structure of the first connection piece 53 described above. That is, a shaft hole 544 penetrating in parallel with the width direction of the second connection piece 54 is drilled in the front bearing block 542 from one end to the other end of the width direction. A shaft hole 545 is drilled, in the rear bearing block 543, in parallel with the width direction of the second connection piece 54 from the other end to the one end. These shaft holes 545 in the rear bearing block 543 have a depth less than 1/2 of the width of the bearing block 543. As a result, in the state where the bearing block 543 on the rear center of the front second connection piece 54 is inserted between the bearing blocks 542 on the front both sides of the rear second connection piece 54, the front pair of shaft holes 544 of the rear second connection piece 54 and the rear pair of shaft holes 545 of the front second connection piece 54 are continuously connected to each other, and a pair of insertion holes is constituted. The shaft is inserted into each of the pair of insertion holes, and the successive second connection pieces 54 are connected. As described above, the plurality of second connection pieces 54 is connected in a string and constitutes the second connection piece string 52. The successive second connection pieces 54 are connected rotatably with respect to each other around the shaft. The main body part of the second connection piece 54 has a U-shaped section, and since the side plates 540 of the successive second connection pieces 54 are brought into contact with each other, the second connection piece string 52 is bendable to the inner side from the linearly aligned state but cannot be bent to the outer side.

The second connection piece 54 has a lock mechanism for fixing the first connection piece string 51 to the second connection piece string 52. This lock mechanism is made up of a chuck block 548 and a lock pin block 546.

The lock pin block 546 is formed on a back surface above the leading end of the side plate 540 of the second connection piece 54. The lock pin block 546 has a cuboid shape, and a lock pin 547 protruding forward is formed on a surface on the front thereof. This lock pin 547 has a shape following a pinhole of the pinhole block 539 of the first connection piece 53. A chuck block 548 is formed on a back surface above the rear end of the side plate 540 of the second connection piece 54. The chuck block 548 has a cuboid shape, and its rear portion is notched diagonally from the front toward the rear. When the successive second connection pieces 54 are linearly aligned, the rear portion of the chuck block 548 of the front second connection piece 54 and the front portion of the lock pin block 546 of the rear second connection piece 54 form a fitting receiving section having a predetermined shape.

When the first and second connection piece strings 51 and 52 are linearly aligned, and the first connection piece string 51 is pressed onto the second connection piece string 52, the pinhole block 539 of the first connection piece 53 is fitted in the fitting receiving section formed by the successive second connection pieces 54 while the lock pin 547 of the lock pin block 546 in the second connection piece 54 is inserted into the pinhole. As a result, the first connection piece string 51 is locked with respect to the second connection piece string 52. This lock state is maintained by fitting of the pinhole block 539 of the first connection piece 53 in the fitting receiving section formed on the successive second connection pieces 54. The first and second connection piece strings 51 and 52 joined as above constitute a columnar body having a certain degree of rigidity. This columnar body has a cylindrical shape having a substantially frame-shaped section.

Figures 15(a) and 15(b) are side views illustrating a position relationship between the first connection piece string 51 in Figure 1 and the roller 59 of the ejection section 58. In Figure 15(a), the first connection piece string 51 is made up of a plurality of the first connection pieces 53 molded having the front portion with a recess shape and the rear portion with a projecting shape. In Figure 15(b), the first connection piece string 51 is made up of a plurality of the first connection pieces 53 molded having the front portion with a projecting shape and the rear portion with a recess shape.

As described above, the first connection piece 53 is molded having the front portion with a recess shape and the rear portion with a projecting shape. The receiving sections 535 and 537 are formed on the leading end of the first connection piece 53, while the protrusion sections 536 and 538 are formed on the rear end. When the successive first connection pieces 53 are aligned linearly, the protrusion sections 536 and 538 on the rear end of the front first connection piece 53 are fitted in the receiving sections 535 and 537 on the leading end of the rear first connection piece 53. As a result, further bending of the successive first connection pieces 53 to the outer side from the linearly aligned state is limited. The first connection piece string 51 is housed while being bent to the inner side and is guided to the ejection section 58 while bending to the inner side. That is, there is no need that the first connection piece string 51 can be bent to the outer side, and by limiting the bending of the first connection piece string 51 to the outer side, the rigidity of the columnar body by joining the first and second connection piece strings 51 and 52 can be improved. The aforementioned effects are similarly obtained even if the first connection piece 53 is molded having its front portion with a projecting shape and the rear portion with a recess shape, that is, even in the case where the protrusion sections 536 and 538 are formed on the leading end of the first connection piece 53 and the receiving sections 535 and 537 are formed on the rear end.

If the first connection piece 53 is molded having its front portion with a recess shape and the rear portion with a projecting shape, that is, in the case where the protrusion sections 536 and 538 are formed on the rear end of the first connection piece 53 and the receiving sections 535 and 537 are formed on the leading end, smoothness of movement of the first connection piece string 51 can be improved as compared with the case where the first connection piece 53 is molded having the front portion with a projecting shape and the rear portion with a recess shape.

When the first connection piece string 51 is sandwiched between the drive gear 56 and the guide roller 57, the linear gear 500 on the rear surface of the first connection piece 53 is engaged with the drive gear 56, and when the drive gear 56 is rotated, the first connection piece string 51 is sent out from the housing section inside the main body cover 12. When passing between the drive gear 56 and the guide roller 57, the first connection piece string 51 changes its posture from a perpendicular posture to a horizontal posture while being bent to the inner side. As illustrated in Figure 15(b), in the case where the receiving sections 535 and 537 are formed on the rear end of the first connection piece 53 and the protrusion sections 536 and 538 are formed on the leading end, when the rear first connection piece 53 is bent to the inner side with respect to the front first connection piece 53, the protrusion sections 536 and 538 on the leading end of the first connection piece 53 protrude from a piece surface of the front first connection piece 53 in some cases. If the protrusion sections 536 and 538 on the leading end of the first connection piece 53 protrude from the piece surface of the front first connection piece 53, it is likely that the protruding portions collide against the guide roller 57 when passing between the drive gear 56 and the guide roller 57. In order to avoid this, measures are needed such that a part of the guide roller 57 is cut out, the posture of the first connection piece 53 is changed from the perpendicular posture to the horizontal posture before the first connection piece 53 is sandwiched between the drive gear 56 and the guide roller 57, and another guide roller is arranged on the rear of the guide roller 57 in order to guide it between the drive gear 56 and the guide roller 57 in the state where the attitude is maintained and the like.

Moreover, the first connection piece string 51 is guided to the ejection section 58 in the linearly aligned state. However, if the first connection piece string 51 is guided to the ejection section 58 in the inward bent state for some reason, the protrusion sections 536 and 538 on the leading end of the first connection piece 53 protrude from the piece surface of the first connection piece 53 on the front thereof similarly as above, and it is likely that the protruding portions collide against the plurality of rollers 59 arranged on an upper part of the ejection section 58. In order to avoid this, a measure such as notching a part of the upper part roller 59 of the ejection section 58 or the like is needed.

On the other hand, as illustrated in Figure 15(a), if the receiving sections 535 and 537 are formed on the leading end of the first connection piece 53 and the protrusion sections 536 and 538 on the rear end, there is a case where the protrusion sections 536 and 538 are formed on the rear end of the first connection piece 53 protrude from the piece surface of the first connection piece 53 on the rear thereof but do not protrude from the piece surface of the first connection piece 53 on the front thereof. Thus, when the first connection piece string 51 is to be sent out, the collision of the protrusion sections 536 and 538 of the first connection piece 53 against the guide roller 57 or the upper part roller 59 of the ejection section 58 as described above can be avoided. On the other hand, when the first connection piece string 51 is pulled back, the first connection piece string 51 is returned to the ejection section 58 in the state where the first connection piece string 51 constitutes the columnar body together with the second connection piece string 52 and thus, the probability that the protrusion sections 536 and 538 on the rear of the first connection piece 53 collide against the upper part roller 59 of the ejection section 58 is low. Similarly, when the first connection piece string 51 is pulled back, the first connection piece string passes between the drive gear 56 and the guide roller 57 in the state where the horizontal posture is maintained and thus, the probability that the protrusion sections 536 and 538 on the rear of the first connection piece 53 collide against the guide roller 57 is low.

As described above, since the receiving sections 535 and 537 are formed on the leading end of the first connection piece 53 and the protrusion sections 536 and 538 are formed on the rear end, the collision of the protrusion sections 536 and 538 of the first connection piece 53 against the guide roller 57 and the like can be avoided, whereby the first connection piece string 51 can be smoothly moved.

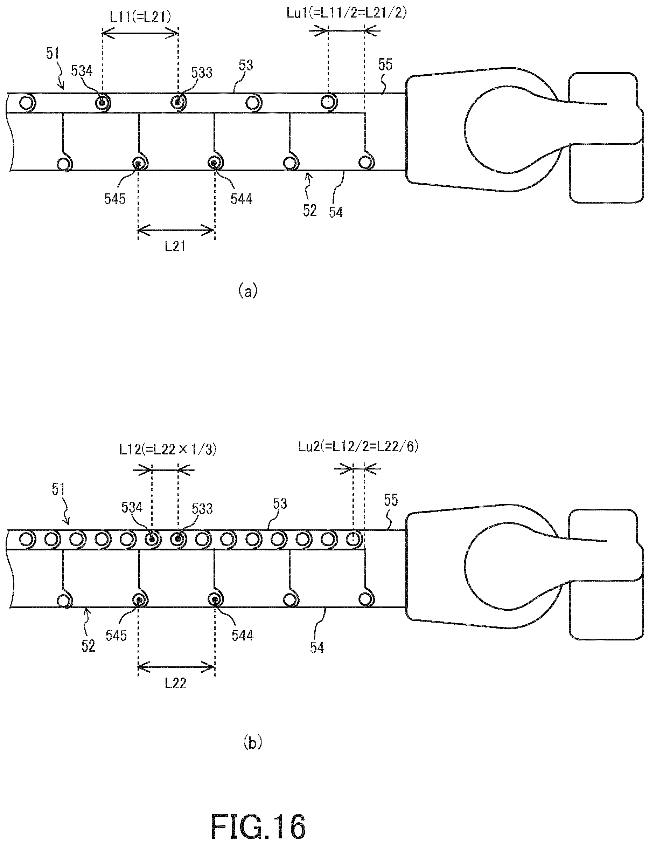

Figure 16(a) is a side view illustrating the arm section 5 in Figure 1. Figure 16(b) is a side view illustrating an example of another dimension of the arm section 5 in Figure 16(a). Here, the length of the first connection piece 53 is defined as a distance between a center of the shaft hole 533 of the front bearing block 531 and a center of the shaft hole 534 of the rear bearing block 532. Similarly, the length of the second connection piece 54 is defined as a distance between a center of the insertion hole 544 of the front bearing block 542 and a center of the insertion hole 545 of the rear bearing block 543.

As illustrated in Figure 16(a), typically, a length L11 of the first connection piece 53 is constituted as the same length as a length L21 of the second connection piece 54. The first connection piece string 51 is offset by a length Lu1 to the front or to the rear from the second connection piece string 52 by means of the head piece 55. The offset length Lu1 is substantially equal to 1/2 of the length L21 of the first connection piece 53. As a result, arrangement of connection portions of each of the first and second connection piece strings 51 and 52 on a straight line parallel with the thickness direction of the arm section 5 can be avoided, and the rigidity of the arm section 5 as the columnar body can be ensured.

The length L11 of the first connection piece 53 may be constituted to be a length different from the length L21 of the second connection piece 54 or typically, shorter than the length L21 of the second connection piece 54. For example, as illustrated in Figure 16(b), a length L12 of the first connection piece 53 may be constituted to be a length of 1/3 of a length L22 of the second connection piece 54. In this case, too, the first connection piece string 51 is offset by a length Lu2 to the rear from the second connection piece string 52 by means of the head piece 55. The offset length Lu2 is substantially equal to 1/2 of the length L12 of the first connection piece 53. As a result, arrangement of the connection portions of each of the first and second connection piece strings 51 and 52 on a straight line parallel with the thickness direction of the arm section 5 can be avoided, and the rigidity of the arm section 5 as the columnar body can be ensured.

Some embodiments of the present invention have been described, but these embodiments are presented as examples and are not intended to limit the scope of the invention. These embodiments can be put into practice in other various forms and are capable of various types of omission, replacement, and changes in a range not deviating from the gist of the invention. These embodiments and their variations are included in the scope and the gist of the invention and similarly included in the invention described in claims and the scope equivalent to them.

### [Reference Signs List]

53...first connection piece, 530...main body part, 531, 532...bearing block, 533, 534...shaft hole, 535, 537...receiving section, 536, 538...protrusion section

## Claims

1. A linear extension and retraction mechanism comprising:
a plurality of flat-plate shaped first connection pieces connected together bendably; and
a plurality of groove-shaped second connection pieces connected together bendably on a bottom surface side, wherein
a foremost one of the second connection pieces is joined to a foremost one of the first connection pieces;
the first and second connection pieces become linearly rigid when joined together and return to a bent state when separated;
the first connection piece has a main body part having a flat-plate shape, a pair of bearing sections being provided on both sides on a front of the main body part, a single bearing section being provided on a center on a rear of the main body part, the pair of bearing sections on the front and the bearing section on the rear being inserted with a shaft; and
in order to limit bending of the connected first connection pieces to a front surface side from a linearly aligned posture, a projection section protruding to the rear is provided on the bearing section on the rear, and a receiving section adapted to receive the projection section is provided between the pair of bearing sections on the front.

2. The linear extension and retraction mechanism according to claim 1, further comprising:
an ejection section including a plurality of rollers compressing the first and second connection pieces joined in order to support the joined first and second connection pieces movably to front and rear;
a drive gear arranged on the rear of the ejection section and adapted to move the first connection piece to the front and rear by being engaged with the first connection piece; and
a guide roller adapted to press the first connection piece to the drive gear.

3. The linear extension and retraction mechanism according to claim 1, wherein
the successive bearing sections and the projection section of the first connection piece are formed so that their surfaces make a single flat surface with a surface of the main body part.

4. The linear extension and retraction mechanism according to claim 1, wherein
a shaft is inserted into a shaft hole of the bearing section on the front in the first connection piece and a leading end of the shaft is fastened in the bearing section on the rear.

5. The linear extension and retraction mechanism according to claim 1, wherein
a shaft is inserted into a through hole penetrating in a width direction where a shaft hole of the bearing section on the front in the first connection piece communicates with a shaft hole of the bearing section on the rear.

6. The linear extension and retraction mechanism according to claim 1, wherein
a pair of bearing sections is provided on front both sides of a bottom plate of the second connection piece, a single bearing section is provided on a rear center of the bottom plate of the second connection piece, and the front pair of bearing sections and the rear bearing section are inserted with a shaft.

7. The linear extension and retraction mechanism according to claim 1, wherein
the first connection piece is constituted with the same length as that of the second connection piece, and the foremost one of the first connection pieces is coupled to the foremost one of the second connection pieces so that a leading end of the first connection piece is displaced by 1/2 of the length with respect to a leading end of the second connection piece.

8. The linear extension and retraction mechanism according to claim 1, wherein
a length of the first connection piece is smaller than a length of the second connection piece, and the foremost one of the first connection pieces is coupled to the foremost one of the second connection pieces so that a leading end of the first connection piece is displaced by 1/2 of the length of the first connection piece with respect to a leading end of the second connection piece.

9. A linear extension and retraction mechanism comprising:
a plurality of first connection pieces connected together bendably;
a plurality of second connection pieces connected together bendably, a foremost one of the second connection pieces being coupled to a foremost one of the first connection pieces, the first and second connection pieces becoming linearly rigid when joined together and returning to a bent state when separated; and
an ejection section adapted to support the joined first and second connection pieces movably to front and rear, wherein
the first connection piece has a main body part, at least one bearing section being provided on front of the main body part, at least one bearing section being provided on rear of the main body part, the front bearing section and the rear bearing section are inserted with a shaft; and
in order to limit bending of the connected first connection pieces to a front surface side from a linearly aligned posture, a projection section protruding to the rear is provided on the bearing section on the rear, and a receiving section receiving the projection section is provided on the bearing section on the front.
